# FASCICULE DE BREVET EUROPEEN

(11) **EP 2 320 535 B1**
(45) Date de publication et mention de la délivrance du brevet: **11.09.2013**
(21) Numéro de dépôt: 10354036.5
(22) Date de dépôt: 05.07.2010
(51) Int. Cl.: H02H 3/02, H01H 71/10, H01H 9/54, H02H 3/07, H02H 7/30

(54) **Disjoncteur limiteur de courant, dispositif de distribution électrique pourvu d'un tel disjoncteur limiteur et procédé de limitation de courant**
Elektrischer Schutzschalter, Stromverteilungsvorrichtung, die mit einem solchen Schutzschalter ausgestattet ist, und Begrenzungsverfahren des Stromflusses
Current-limiting circuit breaker, electrical distribution device equipped with such a limiting circuit breaker and current-limiting method

(30) Priorité: 06.11.2009 FR 0905352
(43) Date de publication de la demande: 11.05.2011
(73) Titulaire: Schneider Electric Industries SAS, 92500 Rueil-Malmaison (FR)
(72) Inventeur: Diconne, Robert, 38050 Grenoble Cedex 09 (FR); Paupert, Marc, 38050 Grenoble Cedex 09 (FR); Follic, Stéphane, 38050 Grenoble Cedex 09 (FR); Bricquet, Cédric, 38050 Grenoble Cedex 09 (FR); Reymond, Bruno, 38050 Grenoble Cedex 09 (FR)
(74) Mandataire: Picard, Laurent

(56) Documents cités:
- EP-A1- 0 834 975
- WO-A2-2007/064837
- DE-A1- 19 601 540
- DE-A1-102005 040 432
- FR-A1- 2 365 229

## Description

### DOMAINE TECHNIQUE DE L'INVENTION

L'invention relève du domaine des installations électriques et notamment des disjoncteurs limiteurs de courant destinés à être installés dans un circuit électrique de tension alternative ou continue en tête d'une pluralité de départs comportant des disjoncteurs divisionnaires. L'invention relève en particulier du domaine des disjoncteurs rapides, c'est-à-dire des disjoncteurs ayant une vitesse d'ouverture généralement supérieure à un mètre par seconde.

L'invention concerne, en particulier, un disjoncteur limiteur de courant destiné à être installé dans un circuit électrique entre une arrivée et au moins un départ pourvu d'un disjoncteur et/ou d'un contacteur divisionnaire pour limiter un courant circulant dans ledit circuit, ledit dispositif comprenant :
- des moyens interrupteurs disposés en série sur ledit circuit électrique et connectés à des moyens de commande pour ouvrir ledit circuit après une première identification d'un courant de court-circuit et pour fermer automatiquement ledit circuit après une durée prédéterminée, et
- au moins un élément à résistance dépendante de la tension connecté en parallèle desdits moyens interrupteurs pour dissiper l'énergie stockée dans ledit circuit lorsque les moyens interrupteurs sont dans un état ouvert.

L'invention concerne également un dispositif de distribution électrique comportant au moins un départ pourvu d'un disjoncteur et/ou d'un contacteur divisionnaire et un circuit électrique entre une arrivée et ladite pluralité de départs renfermant des moyens limiteurs de courant.

L'invention concerne également un procédé de limitation d'un courant circulant dans un circuit électrique entre une arrivée et au moins un départ pourvu d'un disjoncteur et/ou d'un contacteur divisionnaire, ledit procédé comprenant :
- l'ouverture de moyens interrupteurs disposés en série sur ledit circuit électrique en réponse à la commande d'ouverture dudit circuit lors d'une première identification d'un courant de court-circuit,
- la limitation dudit courant pendant l'état ouvert desdits moyens interrupteurs, et
- la fermeture desdits moyens interrupteurs en réponse à la commande de fermeture dudit circuit après une durée prédéterminée.

### ÉTAT DE LA TECHNIQUE

La demande de brevet européen EP0834975A1 décrit un dispositif de distribution électrique comprenant un circuit électrique renfermant un bloc limiteur disposé entre une arrivée d'un disjoncteur de tête et une pluralité de départs protégés chacun par des disjoncteurs divisionnaires. Le bloc limiteur comprend un interrupteur à contact mécanique et une varistance connectée en parallèle aux bornes dudit interrupteur, ledit interrupteur étant commandé par un actionneur. En présence d'un court-circuit, l'interrupteur est ouvert lorsque le courant dans le circuit électrique dépasse un seuil de courant prédéterminé. L'apparition d'un arc électrique entre les contacts de l'interrupteur du bloc limiteur provoque une limitation du courant de court circuit suivi par une commutation du courant ainsi limité dans la varistance. Au passage du courant à zéro, un courant de fuite à travers la varistance de faible intensité est souvent coupé automatiquement par le disjoncteur divisionnaire. Le bloc limiteur comporte des moyens de temporisation pour fermer l'interrupteur après une durée de temporisation prédéterminée.

Un inconvénient des dispositifs de distribution électrique de l'art antérieur est qu'ils ne sont pas adaptés à la coupure de courts-circuits entre le bloc-limiteur et l'un des disjoncteurs divisionnaires.

### EXPOSÉ DE L'INVENTION

L'invention vise à remédier aux inconvénients des dispositifs de distribution de l'art antérieur en proposant un disjoncteur limiteur de courant destiné à être installé dans un circuit électrique entre une arrivée d'un disjoncteur de tête et au moins un départ pourvu d'un disjoncteur et/ou d'un contacteur divisionnaire, pour limiter un courant circulant dans ledit circuit, ledit disjoncteur comprenant :
- des moyens interrupteurs disposés en série sur ledit circuit électrique et connectés à des moyens de commande pour ouvrir ledit circuit après une première identification d'un courant de court-circuit et pour fermer automatiquement ledit circuit après une durée prédéterminée, et
- au moins un élément à résistance dépendante de la tension connecté en parallèle desdits moyens interrupteurs pour dissiper l'énergie stockée dans ledit circuit lorsque lesdits moyens interrupteurs sont dans un état ouvert,
ledit disjoncteur étant caractérisé en ce qu'il comprend des moyens de sectionnement disposés entre ladite arrivée et lesdits moyens interrupteurs, et connectés aux dits moyens de commande, lesdits moyens de commande étant conçus pour sectionner ledit circuit après une seconde identification dudit courant de court-circuit.

De préférence, les moyens interrupteurs comportent un interrupteur à contact mécanique monté en parallèle avec un interrupteur statique. Avantageusement, l'interrupteur à contact mécanique est à effet Thomson.

Selon un mode de réalisation particulier, le disjoncteur comporte un contacteur disposé entre les moyens interrupteurs et le au moins un départ, ledit contacteur étant connecté au moyens de commande pour être maintenu ouvert par défaut et pour être fermé lors de la mise sous tension dudit disjoncteur, après la fermeture préalable des moyens de sectionnement et l'ouverture consécutive des moyens interrupteurs.

Selon un mode de réalisation préféré, le disjoncteur comporte des moyens de mesure du courant circulant dans le circuit, les moyens de commande comprenant :
- des premiers moyens de comparaison connectés aux dits moyens de mesure du courant pour comparer la valeur d'une première fonction dépendante dudit courant avec un premier seuil prédéterminé pour fournir un signal représentatif de l'identification d'un courant de court-circuit,
- un module de détermination de la valeur d'une seconde fonction dépendante du temps et dudit courant pourvu d'une entrée d'initialisation connectée aux dits premiers moyens de comparaison, et
- des seconds moyens de comparaison connectés au dit module de détermination pour comparer ladite valeur de la seconde fonction avec un second seuil prédéterminé, lesdits seconds moyens de comparaison étant connectés aux moyens interrupteurs pour ouvrir le circuit lorsque la valeur de ladite seconde fonction est supérieure ou égale au dit second seuil.

De préférence, les moyens de commande comprennent des troisième moyens de comparaison connectés au moyens de mesure du courant circulant dans le circuit pour comparer la valeur dudit courant avec une valeur maximale dudit courant, lesdits troisièmes moyens de comparaison étant connectés aux moyens interrupteurs pour ouvrir le circuit lorsque la valeur dudit courant est supérieure ou égale à ladite valeur maximale dudit courant.

L'invention concerne également un dispositif de distribution électrique comportant au moins un départ pourvu d'un disjoncteur et/ou d'un contacteur divisionnaire et un circuit électrique entre une arrivée d'un disjoncteur de tête et ledit au moins un départ, ledit circuit électrique renfermant des moyens limiteurs de courant, ledit dispositif étant caractérisé en ce que lesdits moyens limiteurs de courant comportent un disjoncteur limiteur de courant tel que décrit précédemment, ledit disjoncteur limiteur comprenant des moyens interrupteurs pour limiter un courant circulant dans ledit circuit électrique. De préférence, le dispositif comprend une canalisation préfabriquée alimentant au moins un tableau électrique incorporant un disjoncteur divisionnaire. Alternativement, le dispositif comprend un câble électrique alimentant des départs répartis le long dudit câble.

L'invention concerne également un procédé de limitation d'un courant circulant dans un circuit électrique entre une arrivée d'un disjoncteur de tête et au moins un départ pourvu d'un disjoncteur et/ou d'un contacteur divisionnaire, ledit procédé comprenant :
- l'ouverture de moyens interrupteurs disposés en série sur ledit circuit électrique en réponse à la commande d'ouverture dudit circuit lors d'une première identification d'un courant de court-circuit,
- la limitation dudit courant pendant l'état ouvert desdits moyens interrupteurs, et
- la fermeture desdits moyens interrupteurs en réponse à la commande de fermeture dudit circuit après une durée prédéterminée,
ledit procédé étant caractérisé en ce qu'il comporte le sectionnement automatique dudit circuit après une seconde identification dudit courant de court-circuit.

De préférence, l'ouverture des moyens interrupteurs suite à la première identification comporte :
- la fermeture d'un interrupteur statique desdits moyens interrupteur,
- l'ouverture d'un interrupteur à contact mécanique disposé en parallèle avec ledit interrupteur statique, et
- l'ouverture dudit interrupteur statique.

De préférence, le sectionnement du circuit est réalisé après l'ouverture de l'interrupteur statique.

Selon un mode de réalisation particulier, le procédé comporte une mise sous tension comprenant :
- la fermeture préalable des moyens de sectionnement,
- l'ouverture préalable des moyens interrupteurs,
- la fermeture d'un contacteur disposé entre lesdits moyens interrupteurs et le au moins un départ, et
- la fermeture consécutive desdits moyens interrupteurs.

De préférence, la fermeture consécutive des moyens interrupteurs se fait par l'entremise de l'interrupteur statique. Avantageusement, la mise sous tension est poursuivie par la fermeture de l'interrupteur à contact mécanique, et l'ouverture de l'interrupteur statique.

Selon un mode de réalisation préféré, le procédé comporte la mesure d'un courant circulant dans le circuit électrique, l'ouverture des moyens interrupteurs lors d'une première identification d'un courant de court-circuit comprenant :
- une première comparaison de la valeur d'une première fonction dépendante dudit courant avec un premier seuil prédéterminé afin de réaliser la première identification d'un courant de court-circuit,
- la détermination de la valeur d'une seconde fonction dépendante du temps et dudit courant lorsque ledit courant est supérieur ou égale au dit premier seuil,
- une seconde comparaison de ladite valeur de la seconde fonction avec un second seuil prédéterminé, l'ouverture desdits moyens interrupteurs étant commandée lorsque la valeur de ladite seconde fonction est supérieure ou égale au dit second seuil.

De préférence, le procédé comprend une troisième comparaison de la valeur du courant avec une valeur courant maximale dudit courant, l'ouverture desdits moyens interrupteurs étant commandée lorsque la valeur dudit courant est supérieure ou égale à ladite valeur maximale dudit courant.

De préférence, la valeur de la première fonction dépendante dudit courant est égale à la valeur du courant. Avantageusement, la seconde fonction est une intégrale dans le temps du courant ou du carré dudit courant circulant dans le circuit électrique.

Selon un mode de réalisation préféré, le second seuil est choisi supérieur à un troisième seuil de déclenchement certain du disjoncteur divisionnaire présentant le seuil de déclenchement instantanée le plus élevé et inférieur à un quatrième seuil de non déclenchement du disjoncteur de tête.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 est une vue schématique d'un disjoncteur limiteur de courant selon l'invention.
La figure 2 est une vue schématique d'un disjoncteur limiteur de courant selon un deuxième mode de réalisation.
La figure 3 est une vue schématique d'un disjoncteur limiteur de courant selon un troisième mode de réalisation.
La figure 4 représente un dispositif de distribution électrique comprenant deux disjoncteurs limiteurs de courant selon l'invention.
La figure 5 représente un autre dispositif de distribution électrique comprenant un disjoncteur limiteur de courant selon l'invention protégeant une canalisation préfabriquée.
La figure 6 est une vue schématique des moyens de commande du disjoncteur limiteur de courant de la figure 1.
La figure 7 représente les courbes de déclenchement du disjoncteur divisionnaire présentant le seuil de déclenchement instantané le plus élevé et d'un disjoncteur de tête disposé en amont de l'arrivée.
La figure 8 représente un algorithme du procédé de limitation de courant selon l'invention.
La figure 9 représente un algorithme de la mise sous tension du dispositif de limitation de courant.
Les figures 10A et 10B représentent l'évolution respectivement de la tension en aval du disjoncteur limiteur et du courant circulant dans ledit dispositif, lors de la détection d'un courant de court-circuit en aval d'un disjoncteur divisionnaire.
Les figures 11A et 11B représentent l'évolution respectivement de la tension en aval du disjoncteur limiteur et du courant circulant dans ledit dispositif, lors de la détection d'un courant de court-circuit entre ledit disjoncteur limiteur et un disjoncteur divisionnaire.

### DESCRIPTION DETAILLEE D'UN MODE DE RÉALISATION

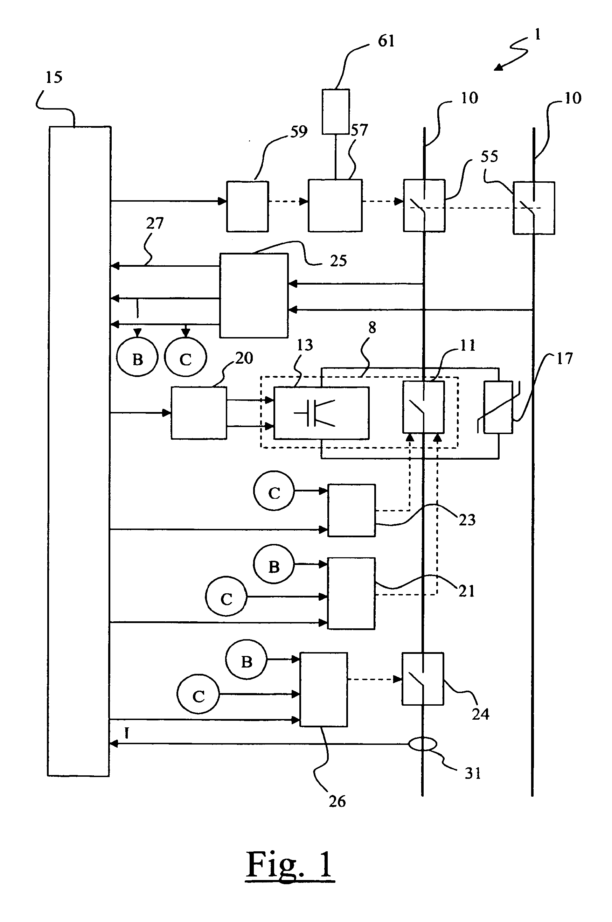

En référence à la figure 1, le disjoncteur limiteur de courant 1 est destiné à être disposé dans un circuit électrique 10 et comporte des moyens interrupteurs 8, en l'occurrence un interrupteur à contact mécanique 11 monté en parallèle avec un interrupteur statique 13. L'interrupteur à contact mécanique 11 est fermé par défaut, c'est-à-dire lorsqu'il n'est pas alimenté. Les moyens interrupteur 8 sont disposés en série sur le circuit électrique 10 et sont connectés à des moyens de commande, en l'occurrence une unité de commande 15. Cette unité de commande 15 permet, entre autres, d'ouvrir et de fermer les moyens interrupteurs 8. Le disjoncteur limiteur 1 comporte au moins un élément dont la tension varie en fonction du courant selon une fonction non linéaire pour dissiper l'énergie inhérente à la limitation d'un court-circuit lorsque les moyens interrupteurs 8 sont ouverts, c'est-à-dire en d'autres termes un élément à résistance dépendante de la tension. Cet élément est en l'occurrence une varistance 17 connectée en parallèle des moyens interrupteurs 8 pour dissiper l'énergie stockée dans le circuit 10 lorsque lesdits moyens interrupteurs passent d'un état fermé à un état ouvert.

Dans le mode de réalisation représenté à la figure 1, l'interrupteur statique 13 est bidirectionnel en tension et en courant, et il est commandé par l'entremise d'un circuit de commande 20 connecté à l'unité de commande 15. L'interrupteur à contact mécanique 11 est, quant à lui, à effet Thomson et permet de passer très rapidement de l'état fermé à l'état ouvert en quelques dizaines de microsecondes. Généralement la vitesse d'ouverture des contacts mécaniques est supérieure à 1 mètre par seconde pour un courant augmentant à une vitesse de 10 Ampères par microseconde. L'interrupteur à contact mécanique 11 est commandé à l'aide de l'unité de commande 15 par l'entremise d'un premier circuit 21 de propulsion des contacts permettant d'ouvrir rapidement ledit interrupteur et d'un second circuit 23 de verrouillage ou de relâchement permettant de maintenir ouvert ou de refermer ledit interrupteur.

Le disjoncteur limiteur comprend, en outre, un contacteur 24 disposé entre les moyens interrupteurs 8 et les départs 49. Ce contacteur 24 permet en particulier d'isoler le disjoncteur limiteur 1 par rapport aux départs tant que les différentes alimentations du disjoncteur limiteur ne sont pas opérationnelles. Ce contacteur 24 permet ainsi d'assurer la sécurité positive nécessaire à la fonction disjoncteur. Ce contacteur 24 permet aussi, dans le cas où il possède les caractéristiques d'un sectionneur, d'assurer une fonction de sectionnement entre l'amont et l'aval. Dans ce cas, le disjoncteur limiteur de courant est un disjoncteur rapide présentant une fonction de contacteur et permettant d'être réenclenché de façon synchronisée après son déclenchement. Une fermeture de l'interrupteur statique 13 sous une tension sensiblement nulle permet, en outre, de limiter le courant de mise sous tension des charges connectées en aval. Ainsi le disjoncteur limiteur est un disjoncteur rapide limiteur de courant pouvant être réenclenché de façon synchronisée. Le contacteur 24 est commandé par l'entremise d'un circuit de commande 26 connecté à l'unité de commande 15. L'unité de commande 15 est conçue pour maintenir ouvert le contacteur 24 lorsque le disjoncteur limiteur 1 n'est pas sous tension et pour le fermer lors de la mise sous tension dudit disjoncteur limiteur, après la fermeture du sectionneur 55 et après l'ouverture consécutive des moyens interrupteurs 8. De cette façon, la mise sous tension des départs se fait via les moyens interrupteurs 8, de préférence via l'interrupteur statique 13, c'est-à-dire dès que l'alimentation électrique de l'unité de commande 15 a été établie. Ceci permet d'assurer la protection du circuit électrique 10 et des départs dès la mise sous tension du disjoncteur limiteur. Le contact mobile du contacteur 24 peut être associé à un circuit magnétique de renforcement, par exemple ayant la forme d'un « U », afin d'éviter la répulsion dudit contact mobile lors du passage du courant de court-circuit.

Les circuits de commande 21, 23, 26 décrits précédemment comprennent des entrées d'alimentation connectées à des moyens d'alimentation électrique 25, en l'occurrence un convertisseur de tension alternative en tension continue. Les moyens d'alimentation 25 sont donc connectés au circuit électrique 10 en amont des moyens interrupteurs 8, pour prélever l'énergie électrique alternative dans ledit circuit et la convertir en tension continue. Dans le mode de réalisation représenté à la figure 1, les moyens d'alimentation 25 comportent une sortie continue 27, par exemple de 3,3 volts ou de 5 volts, connectée à l'unité de commande 15 pour l'alimenter. Les moyens d'alimentation comportent également une sortie B, par exemple de 24 volts, et une sortie C, par exemple de 250V à 800 Volts, ces deux sorties permettant de réaliser des fonctions appel et maintien. En l'occurrence, les circuits 21, 26 sont tous les deux connectés à la sortie B et à la sortie C. Le circuit 23 est, quant à lui, connecté à la sortie C pour réaliser la propulsion à effet Thomson. De la même façon, l'unité de commande 15 est connectée à la sortie B, ainsi qu'à la sortie C des moyens d'alimentation 25, pour réaliser un contrôle de leur tension respective ou du fonctionnement normal des moyens d'alimentation 25.

Lorsque l'unité de commande 15 est correctement alimentée, l'unité de commande 15 permet d'ouvrir le circuit électrique 10, après l'identification d'un courant de court-circuit.

Dans le mode de réalisation représenté à la figure 1, cette identification d'un courant de court-circuit est réalisée en utilisant un capteur 31 pour mesurer la valeur du courant I circulant dans le circuit électrique 10, ledit capteur étant connecté à l'unité de commande 15. Comme cela est expliqué de manière détaillée dans ce qui suit, une fonction de cette valeur du courant, restituant éventuellement ladite valeur de ce courant, est comparée à un seuil, au delà duquel le courant est identifié comme étant un courant de court-circuit.

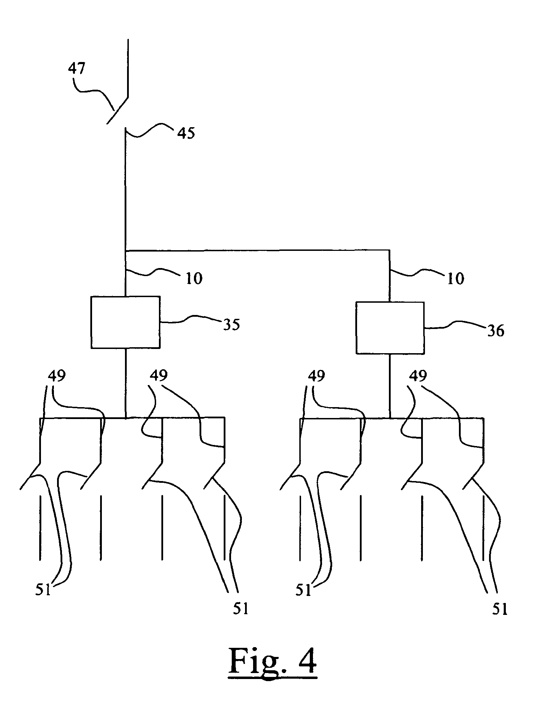

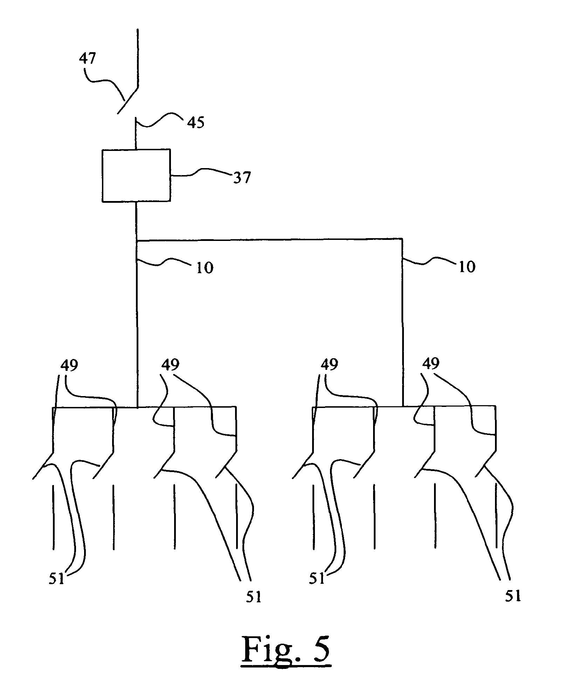

Comme cela est représenté sur les figure 4 et 5, les disjoncteurs limiteurs de courant 35, 36, 37 sont destinés à être installés dans des circuits électriques 10 entre une arrivée 45 d'un disjoncteur de tête 47 et une pluralité de départs 49pourvus d'appareils divisionnaires 51. Certains ou la totalité des appareils divisionnaires 51 peuvent être des disjoncteurs, c'est-à-dire des appareils ayant une fonction de protection. Alternativement certains ou la totalité des appareils divisionnaires 51, 52 peuvent être des contacteurs pouvant également avoir une fonction de contrôle et régulation. Certains ou la totalité des appareils divisionnaires 51, 52 peuvent également avoir les deux fonctions de protection et de contrôle. Dans ce contexte, l'unité de commande 15 du disjoncteur limiteur 1 est conçue pour fermer automatiquement le circuit électrique 10 après une durée prédéterminée. Cette durée est généralement déterminée en fonction du temps nécessaire pour isoler le départ sur lequel un court-circuit est apparu. Ainsi, cette durée prédéterminée est généralement supérieure au temps de réponse du disjoncteur divisionnaire 51 pour isoler le départ sur lequel se serait produit un court-circuit. De cette façon, ce retard à la fermeture des moyens interrupteurs 8 permet de remettre sous tension les départs sains, dès que le court-circuit a été isolé. Ceci permet d'assurer la sélectivité des déclenchements et la continuité de service.

Dans le mode de réalisation représenté à la figure 4, deux disjoncteurs limiteurs de courant 35, 36 sont utilisés en aval du disjoncteur de tête 47. Le nombre de disjoncteurs limiteurs de courant et le nombre de départ par disjoncteur limiteur de courant peuvent être quelconque. Dans un mode particulier d'un dispositif de distribution non représenté, un seul disjoncteur limiteur est utilisé en amont d'un câble électrique alimentant des départs 49 répartis le long dudit câble.

Dans le mode de réalisation représenté à la figure 5, le dispositif de distribution électrique comprend un seul disjoncteur limiteur de courant 37 selon l'invention protégeant une canalisation préfabriquée sur laquelle sont connectés plusieurs tableaux comprenant une pluralité de départs 49.

Le disjoncteur limiteur 1 représenté à la figure 1 comprend des moyens de sectionnement ou sectionneur 55 permettant de couper et d'isoler le circuit électrique 10 ainsi que les départs 49 en aval dudit circuit électrique. Le sectionneur 55 est disposé en amont des moyens interrupteurs 8, ou plus précisément entre l'arrivée 45 du disjoncteur de tête 47 et lesdits moyens interrupteurs. Le sectionneur 55 peut être commandé manuellement à l'aide d'une manette 61. Il peut également être commandé à l'aide de l'unité de commande 15. Les contacts du sectionneur 55 sont généralement actionnés à l'aide d'un mécanisme à déclenchement libre 57. Un circuit de commande intermédiaire 59 permet d'actionner le mécanisme à déclenchement libre 57 du sectionneur 55 en fonction d'un ordre de commande fourni par l'unité de commande 15. Ce circuit intermédiaire comprend une entrée d'alimentation connectée à l'une des sorties des moyens d'alimentation électrique 25. Comme cela est détaillé ci-après, l'unité de commande 15 est conçue pour sectionner ledit circuit après une seconde identification, consécutive à la première identification, d'un courant de court-circuit.

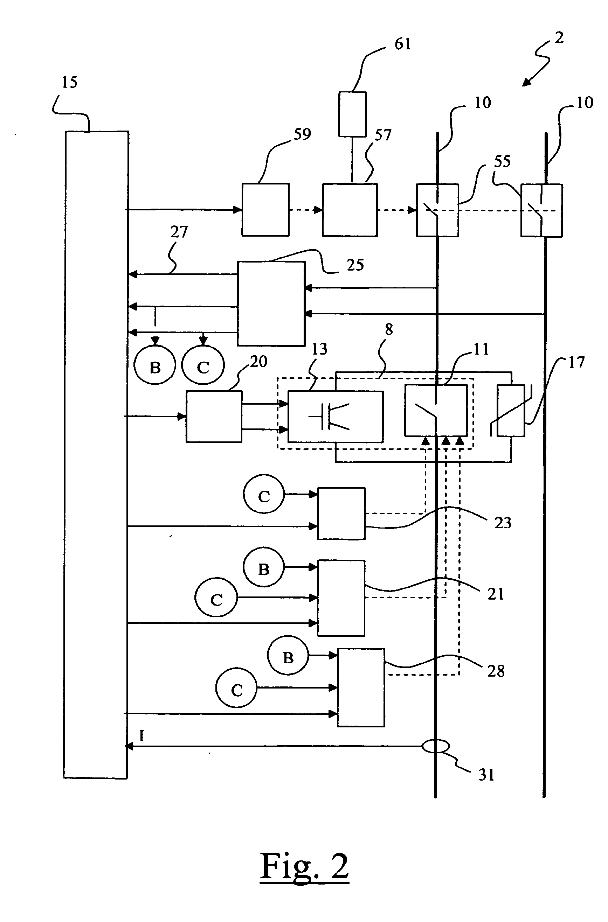

Dans le mode de réalisation représenté à la figure 2, le disjoncteur limiteur 2 comprend la plupart des éléments représentés à la figure 1 sous les mêmes références numériques. Dans le disjoncteur limiteur 2, l'interrupteur à contact mécanique 11 est ouvert par défaut, c'est-à-dire lorsqu'il n'est pas alimenté. Comme dans le mode représenté à la figure 1, l'interrupteur à contact mécanique 11 est commandé aux moyens d'un premier circuit 23 de propulsion des contacts permettant d'ouvrir rapidement ledit interrupteur et d'un second circuit 21 de verrouillage ou de relâche permettant de maintenir ouvert ou de refermer ledit interrupteur. En plus des circuits 21, 23, l'interrupteur à contact mécanique 11 est commandé par un circuit 28 permettant d'assurer la pression de contact.

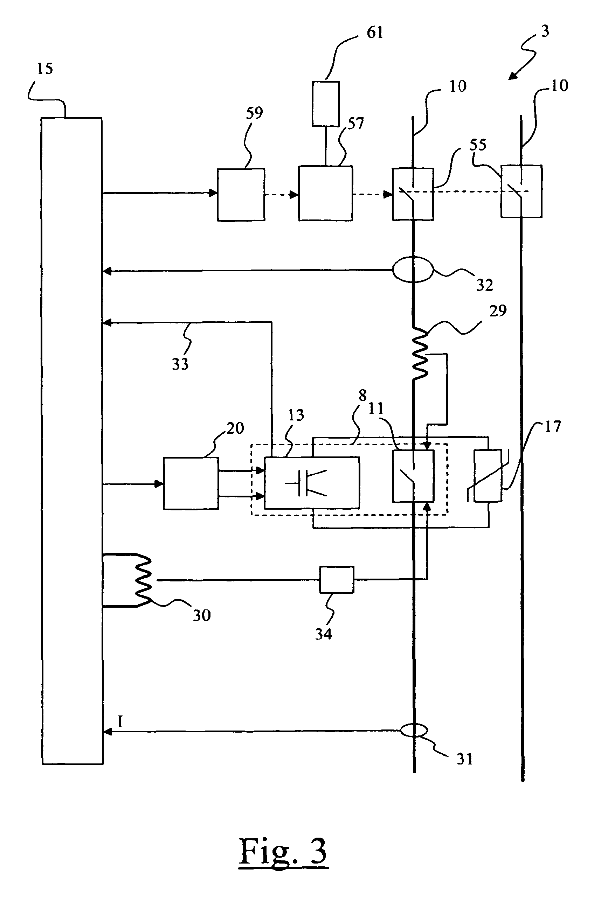

Dans le mode de réalisation représenté à la figure 3, le disjoncteur limiteur 3 comprend la plupart des éléments représentés à la figure 1 sous les mêmes références numériques. Dans le disjoncteur limiteur 3, l'interrupteur à contact mécanique 11 est fermé par défaut, c'est à dire lorsqu'il n'est pas alimenté. Cet interrupteur à contact mécanique 11 est commandé à l'aide d'un actionneur 29 à propre courant connecté en série sur le circuit 10. Par actionneur à propre courant, on entend généralement un actionneur alimenté par le courant circulant dans le circuit 10. L'interrupteur à contact mécanique 11 peut également être commandé au moyen d'un actionneur 30 alimenté par l'unité de commande 15 pour maintenir les contacts ouverts et autoriser leur fermeture ou pour assurer le déverrouillage d'un accrochage 34.

Dans le mode de réalisation représenté à la figure 3, l'unité de commande 15 est alimentée très rapidement, c'est-à-dire généralement en moins de 100 microsecondes, en énergie électrique par la tension aux bornes de l'interrupteur statique 13 ramenée à l'aide de la ligne 33. Alternativement ou en complément, l'unité de commande 15 peut également être alimentée au moyen d'un capteur de courant 32. Dans ce mode de réalisation, l'utilisation d'un contacteur disposé entre les moyens interrupteurs 8 et les départs n'est plus requise, du fait que l'interrupteur à contact mécanique 11 est fermé par défaut et que son ouverture est générée par la présence d'une énergie dans le circuit 10.

Les modes de réalisation représentés sur les figures 1 à 3 sont des disjoncteurs limiteurs de courant bipolaires ou des disjoncteurs rapides limiteur de courant bipolaires destinés à protéger un circuit électrique bifilaire, c'est-à-dire comportant un conducteur de phase et un conducteur de neutre. Dans d'autres modes de réalisation non représentés, les disjoncteurs limiteurs de courant peuvent être de type tripolaire ou tétrapolaire, c'est à dire configurés pour protéger des circuits électriques ayant trois ou quatre fils, c'est-à-dire encore un, deux ou trois conducteurs de phase. La transposition des disjoncteurs limiteurs de courant bipolaire à des dispositifs tripolaires ou tétrapolaires est à la portée de l'homme du métier, et consiste essentiellement à reproduire les éléments sur le conducteur de phase du circuit électrique sur les autres conducteurs de phase.

Dans les modes de réalisation représentés sur les figures 1 à 3, l'inductance de câblage entre l'interrupteur à contact mécanique 11 et l'interrupteur statique 13 est généralement choisie inférieure à 200 nano-Henry, par exemple sensiblement égale à 50 nano-Henry, ce qui permet de maitriser les contraintes en tension de l'interrupteur statique 13. De la même façon et pour les mêmes raisons, l'inductance de câblage entre l'interrupteur statique 13 et l'élément à résistance dépendante de la tension17 est généralement choisie inférieure à 200 nano-Henry, par exemple sensiblement égale à 50 nano-Henry.

L'interrupteur statique 13 peut avoir toutes les configurations connus de l'homme du métier. L'interrupteur statique 13 peut, par exemple, être insérés entre les branches continues d'un pont de diodes.

La tension d'écrêtage de l'élément à résistance dépendante de la tension 17 est généralement inferieure à 1000 Volts pour un courant de 2500 Ampères, ce qui permet de protéger les charges en amont en présence d'un courant de court-circuit. La tension d'écrêtage est généralement choisie inferieure à la tension d'amorçage d'un dispositif de protection de la foudre, pour éviter qu'il supporte l'énergie de coupure. Généralement, la tension aux bornes de l'interrupteur statique 13 est inferieure à 20 Volts pour un courant de 2500 Ampères.

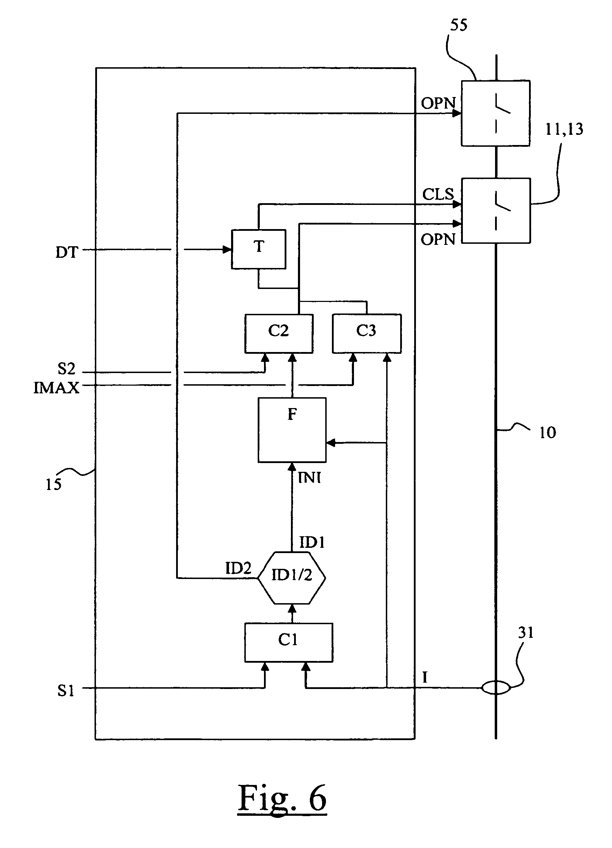

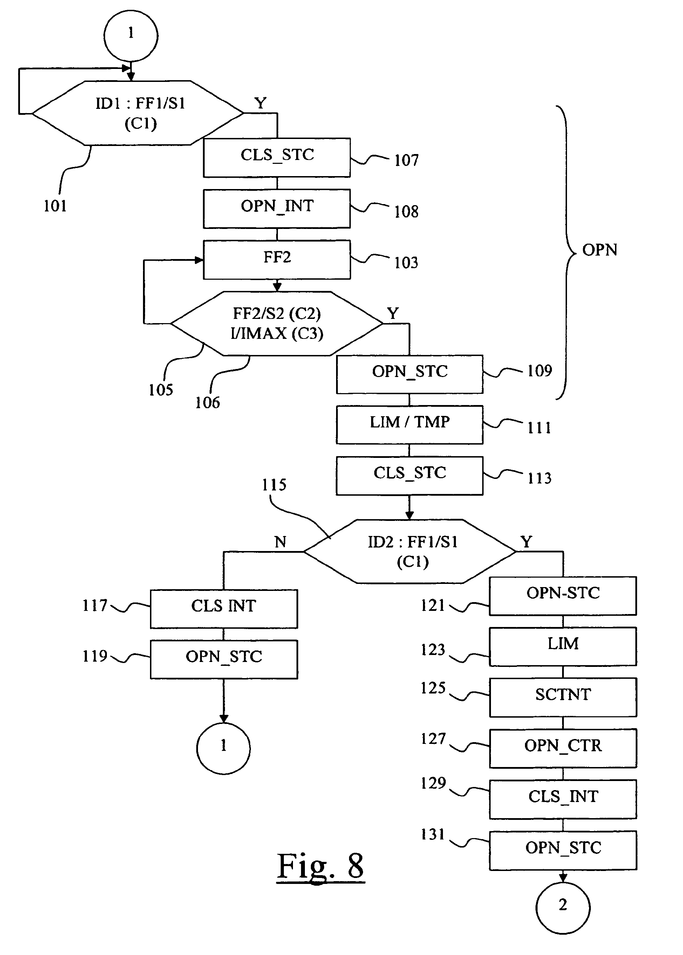

L'unité de commande 15 est représentée partiellement à la figure 6 sous la forme d'un schéma bloc pour montrer un certain nombre de caractéristiques. Ces mêmes caractéristiques de l'unité de commande 15, ainsi que d'autres caractéristiques supplémentaires, ont également été illustrées sous la forme d'étapes dans les algorithmes représentées sur les figures 8.

En référence à la figure 6, l'unité de commande 15 comprend des premiers moyens de comparaison C1 connectés au capteur de courant 31 pour comparer la valeur d'une première fonction FF1 dépendante dudit courant avec un premier seuil prédéterminé S1. Cette première fonction FF1 peut tout simplement restituer la valeur du courant mesuré par le capteur 31. Dans d'autres modes de réalisation, cette première fonction FF1 du courant pourrait être plus complexe, par exemple proportionnelle à une vitesse de croissance dudit courant. Lorsque la valeur de cette fonction FF1 dépasse le premier seuil S1, cela signifie qu'un courant de court-circuit à été identifié. Dans ce cas, les premiers moyens de comparaison C1 permettent de fournir, sur une sortie, un signal représentatif de l'identification d'un courant de court-circuit.

L'unité de commande 15 comporte des moyens permettant, à la suite d'une première identification d'un courant de court-circuit, d'ouvrir les moyens interrupteurs 8 et de les refermer après une durée suffisante pour ouvrir le disjoncteur divisionnaire du départ sur lequel le court-circuit se serait produit. Si le court-circuit a été généré en amont des disjoncteurs divisionnaires 51 ou si le court-circuit est sur un départ 49 comportant un disjoncteur divisionnaire 51 défaillant, les disjoncteurs divisionnaires ne peuvent pas isoler le court-circuit et la fermeture des moyens interrupteurs 8 est donc suivie par une seconde identification d'un courant de court circuit. L'unité de commande 15 comprend un module de test ID1/2 permettant, d'une part, de déterminer qu'il s'agit d'une deuxième identification d'un court-circuit, et d'autre part, dans le cas ou il s'agit d'une deuxième identification d'un court circuit, d'agir directement sur l'ouverture du sectionneur 55 après avoir éliminé ledit court-circuit. Plus précisément, ce module de test ID 1/2 est connecté à la sortie des premiers moyens de comparaison C1 et comporte une première et une seconde sortie ID1, ID2. A la suite d'une première identification d'un courant de court-circuit, la première sortie ID1 permet de fournir un signal représentatif de ladite première identification. Dans le cas d'une seconde identification d'un courant de court-circuit, la seconde sortie ID2 permet de fournir un signal représentatif de ladite seconde identification. Cette seconde sortie est connectée au sectionneur 55 pour sectionner le circuit 10 en réponse à un signal représentatif d'une seconde identification d'un courant de court-circuit. Ainsi le disjoncteur limiteur 1 permet à la fois d'assurer une continuité de service lorsque le court-circuit est isolé par un disjoncteur divisionnaire, et d'isoler l'ensemble du circuit électrique 10 et les départ 49 uniquement dans le cas où ce même court-circuit ne peut être isolé par l'un des disjoncteurs divisionnaires.

Les moyens de l'unité de commande 15 permettant, à la suite d'une première identification d'un courant de court-circuit, d'ouvrir les moyens interrupteurs 8 et de les refermer après une durée prédéterminée sont décrits dans ce qui suit. Ces moyens comportent un module de détermination F de la valeur d'une seconde fonction FF2 dépendante du temps et du courant I circulant dans le circuit électrique 10. Plus précisément, le module de détermination F est pourvu d'une entrée d'initialisation INI connectée aux premiers moyens de comparaison C1, ou plus exactement à la sortie ID1 du module de test ID1/2. De cette façon la détermination de la valeur de la fonction FF2 est initialisée dès la première identification d'un court-circuit. Avantageusement, la fonction FF2 est une intégrale dans le temps du carré du courant circulant dans le circuit électrique. La sortie du module de détermination F permet de fournir un signal représentatif de la valeur de la fonction FF2. Cette sortie est connectée à des seconds moyens de comparaison C2 pour comparer la valeur de la seconde fonction FF2 avec un second seuil prédéterminé S2. La plage de ce second seuil prédéterminé S2 est généralement choisie pour assurer une continuité de service optimum des charges lors de leur mise sous tension vis-à-vis de la protection divisionnaire et lors d'un court circuit vis-à-vis de la protection tête de tableau. A titre d'exemple, lorsque la fonction FF2 est une intégrale dans le temps du carré du courant circulant dans le circuit électrique, le second seuil prédéterminé S2 est généralement compris entre 500 et 4000, pour des valeurs de courant de court-circuit comprises entre 800 et 20000 Ampères, et ceci quelque soient les angles d'enclenchement du court circuit. Une sortie des seconds moyens de comparaison C2 est connectée aux moyens interrupteurs 8 pour ouvrir le circuit 10 lorsque la valeur de la seconde fonction FF2 est supérieure ou égale au second seuil S2. En parallèle avec les seconds moyens de comparaison C2, l'unité de commande 15 peut également comporter des troisièmes moyens de comparaison C3 pour comparer la valeur du courant I circulant dans le disjoncteur limiteur 1 avec un courant maximum admissible IMAX, dont la valeur est prédéterminée. Une sortie des troisièmes moyens de comparaison C3 est connectée aux moyens interrupteurs 8, en l'occurrence l'interrupteur statique 13, pour ouvrir le circuit 10 lorsque la valeur du courant I est supérieure ou égale à cette valeur maximale admissible IMAX. Ainsi, l'ouverture du circuit 10, se produit lorsque le courant atteint sa valeur maximale admissible IMAX ou lorsque la valeur de la fonction FF2 atteint le second seuil S2. Les sorties des seconds et troisième moyens de comparaison C2, C3 sont également connectées à des moyens de temporisation T permettant de refermer les moyens interrupteurs 8, en l'occurrence l'interrupteur statique 13, après une durée prédéterminée DT. Cette fermeture retardée permet, le cas échéant, d'ouvrir le disjoncteur divisionnaire 51 pour isoler le départ sur lequel s'est produit le court-circuit.

L'unité de commande 15 peut également comporter des algorithmes prédictifs pour déterminer les seuils S1 et S2 en fonction de la vitesse de variation du courant. Pour cela, on peut déterminer la vitesse de variation du courant à partir de sa valeur mesurée et définir le seuil S2 comme étant un instant cible à partir duquel il est nécessaire de limiter le courant, cet instant pouvant être déterminé à l'aide d'un modèle prédictif en fonction dudit courant et de sa vitesse de variation.

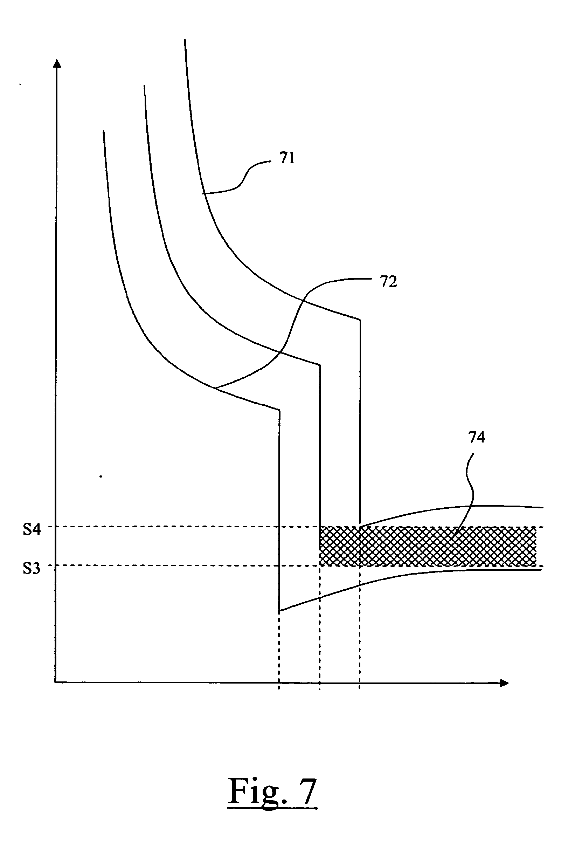

La figure 7 représente de manière schématique les courbes de déclenchement 71, 72 respectivement du disjoncteur de tête 47 et du disjoncteur divisionnaire 51 présentant le seuil de déclenchement instantanée le plus élevé. Plus précisément, ces courbes représentent les variations de l'intégrale du carré du courant dans le temps sur l'axe vertical en fonction du temps sur l'axe horizontal. Le second seuil S2 est avantageusement choisi supérieur à un troisième seuil S3 de déclenchement certain du disjoncteur divisionnaire 51 présentant le seuil de déclenchement instantané le plus élevé. Ce second seuil S2 est également avantageusement choisi inférieur à un quatrième seuil S4 de non déclenchement du disjoncteur de tête 47. La valeur du second seuil S2 est donc prédéterminée dans la zone hachurée 74. Notons que la valeur de ce second seuil S2 peut être prédéterminée selon une fonction variant dans la zone hachurée 74. Grâce à ce choix concernant la valeur du second seuil S2, l'ouverture des moyens interrupteurs 8 est réalisée sans déclenchement du disjoncteur de tête. Par ailleurs, si le court-circuit est en aval d'un des disjoncteurs divisionnaires, l'ouverture des moyens interrupteurs 8 est réalisée après le déclenchement de ce disjoncteur divisionnaire 51. Ce mode de réalisation permet ainsi d'assurer la sélectivité des déclenchements.

La figure 8 illustre le fonctionnement du disjoncteur limiteur 1 à l'aide d'un algorithme mis en oeuvre par l'unité de commande 15. En fonctionnement normal, le sectionneur 55 est fermé et les moyens interrupteurs 8 sont ouverts ou fermés, avantageusement ouverts. Plus précisément, l'interrupteur à contact mécanique 11 est fermé et l'interrupteur statique 13 est ouvert, de sorte que le courant circulant dans le circuit électrique 10 passe par ledit interrupteur à contact mécanique, afin de réduire les pertes énergétiques dans ledit interrupteur statique 13 et d'éviter sa surchauffe.

Dans une première étape d'identification ID1, 101, la valeur de la fonction FF1 du courant I circulant dans le circuit électrique, pouvant être égale à la valeur dudit courant, est comparée avec le premier seuil prédéterminé S1. Cette première comparaison est poursuivie tant que le premier seuil S1 n'a pas été dépassé. Dès que le premier seuil S1 est dépassé, la fermeture de l'interrupteur statique 13 et l'ouverture de l'interrupteur à contact mécanique sont commandées. En même temps, la détermination 103 de la valeur de la seconde fonction FF2 est initialisée. Cette fonction FF2 peut être avantageusement une fonction intégrale dans le temps du carré du courant circulant dans le circuit électrique 10. La valeur de la seconde fonction FF2 est ensuite comparée avec le second seuil prédéterminé S2, dans une seconde étape de comparaison 105. Parallèlement, la valeur du courant I circulant dans le circuit électrique 10 est comparée dans une troisième étape de comparaison 106 de ladite valeur avec une valeur maximale IMAX dudit courant. L'ouverture OPN des moyens interrupteurs 8, en l'occurrence l'interrupteur statique 13, est commandée lorsque la valeur de la seconde fonction FF2 est supérieure ou égale au second seuil S2 ou lorsque la valeur du courant I est supérieure ou égale à la valeur maximale admissible IMAX dudit courant.

Dans le mode de réalisation représenté à la figure 8, l'ouverture OPN de moyens interrupteurs 8, suite à la première identification comporte consécutivement :
- la fermeture 107, CLS_STC de l'interrupteur statique 13,
- l'ouverture 108, OPN_INT de l'interrupteur à contact mécanique 11, et
- l'ouverture 109, OPN_STC dudit interrupteur statique 13.

Dans le mode de réalisation représenté à la figure 1, les deux étapes de fermeture CLS_STC de l'interrupteur statique 13 et d'ouverture OPN_INT de l'interrupteur à contact mécanique 11 sont des étapes préparatoires de l'ouverture complète des moyens interrupteurs 8. Cette séquence de l'ouverture OPN des moyens interrupteurs 8 implique que l'ouverture desdits moyens se fait finalement par l'entremise de l'interrupteur statique 13. De cette façon, l'ouverture des moyens interrupteurs 8 n'entraîne pas la formation d'un arc électrique.

Dans le cas représenté à la figure 8, les étapes préparatoires 107, CLS_STC et 108, OPN_INT sont mises en oeuvre dès la première identification d'un court-circuit, et l'interrupteur statique 13 est ouvert en dernier lieu dès que le second seuil est atteint. Le temps de réponse de l'interrupteur statique 13 étant significativement inférieur à celui de l'interrupteur à contact mécanique 11, la mise en oeuvre préalable de ces étapes préparatoires permet d'ouvrir les moyens interrupteurs 8 dès que le second seuil S2 a été atteint. Par ailleurs, le temps qui s'écoule entre la fermeture 107, CLS_STC et l'ouverture 108, OPN_STC de l'interrupteur statique 13 est limité essentiellement à la durée pour atteindre le second seuil S2.

A la suite de l'ouverture OPN des moyens interrupteurs 8, le courant circulant dans le circuit électrique 10 est dévié dans la varistance 17. Le courant est ainsi limité dans une étape de limitation 111, LIM/TEMP temporisée pendant une durée prédéterminée DT. Pendant cette phase de temporisation, la valeur du courant a été annulée en un temps inférieur dépendant du circuit extérieur. Cette temporisation permet à l'un des disjoncteurs divisionnaires de venir isoler le court-circuit, dans le cas où ce court-circuit est en aval desdits disjoncteurs. A l'issue de cette limitation temporisée du courant, les moyens interrupteurs 8 sont fermés. Au minimum, la fermeture des moyens interrupteurs 8 comporte la fermeture 113, CLS_STC de l'interrupteur statique 13.

Dans une seconde étape d'identification 115, ID2 la valeur de la fonction FF1 du courant I circulant dans le circuit électrique est comparée avec le premier seuil prédéterminé S1.

Dans le cas où le court-circuit a bien été isolé pendant l'ouverture OPN des moyens interrupteurs 8, c'est à dire que le court-circuit était en aval des disjoncteurs divisionnaires, aucun courant de court-circuit n'est normalement identifié pour la deuxième fois. La fermeture des moyens interrupteurs 8 peut être poursuivie par la fermeture 117, CLS_INT de l'interrupteur à contact mécanique 11 et par l'ouverture 119, OPN_INT de l'interrupteur statique 13, ce qui permet d'éviter la surchauffe dudit interrupteur statique 13.

Dans le cas où le court-circuit n'a pas été isolé pendant l'ouverture OPN des moyens interrupteurs 8, c'est à dire que ce court-circuit est en amont des disjoncteurs divisionnaires ou en aval d'un disjoncteur divisionnaire déficient, un courant de court-circuit est identifié pour la deuxième fois. Dans ce cas, l'unité de commande 15 donne l'ordre de ré-ouvrir immédiatement 121 OPN_STC l'interrupteur statique 13 et le courant circulant dans le circuit électrique est dévié dans la varistance 17. Le courant est ainsi limité dans une étape de limitation 123, LIM. Une fois que le courant a été limité, le sectionneur 55 est ouvert dans une étape de sectionnement 125, SCTNT. De cette façon l'ouverture 125, SCTNT du sectionneur 55 a lieu sous un courant limité ce qui permet d'éviter la formation d'un arc électrique entre les contacts dudit sectionneur 55. A la suite du sectionnement du circuit électrique 10, un isolement principal ou complémentaire du disjoncteur limiteur par rapport aux départs 49 est réalisé par ouverture 127, OPN_CTR du contacteur 24, par absence de tension dans le circuit. La séquence d'isolement se poursuit par la fermeture 129, CLS_INT de l'interrupteur à contact mécanique 11 en absence de tension dans le circuit et par l'ouverture 131, OPN_STC de l'interrupteur statique 13 toujours en absence de tension dans ledit circuit.

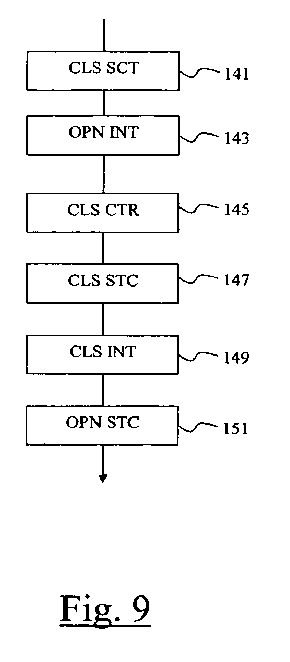

Une fois que le court-circuit a été supprimé, le disjoncteur limiteur 1 peut être mis sous tension par la méthode illustrée par l'algorithme représenté à la figure 9. Cette mise sous tension comprend :
- la fermeture préalable 141, CLS_SCT par la manette des moyens de sectionnement 55,
- l'attente de l'obtention des valeurs nominales des tensions d'alimentation B, C sur les sorties des moyens d'alimentation électrique 25,
- l'ouverture consécutive 143, OPN_INT des moyens interrupteurs 8,
- la fermeture 145, CLS_CTR du contacteur 24, et
- la fermeture consécutive 147, CLS_STC desdits moyens interrupteurs 8, en l'occurrence la fermeture de l'interrupteur statique 13 suivi, si le courant est inférieur au seuil S1, par celle de l'interrupteur à contact mécanique 11 si toutes les valeurs nominales des tensions d'alimentation sont atteintes.

La fermeture 147, CLS_STC consécutive des moyens interrupteurs 8 est réalisée à l'aide de l'interrupteur statique 13 pour éviter la génération d'un arc électrique et pour choisir l'instant de fermeture, par exemple pour démarrer une charge dans de bonnes conditions. La mise sous tension est généralement directement poursuivie par la fermeture 149, CLS_INT de l'interrupteur à contact mécanique 11 et par l'ouverture 151, OPN_STC de l'interrupteur statique 13. Ceci permet de limiter les échauffements de l'interrupteur statique 13.

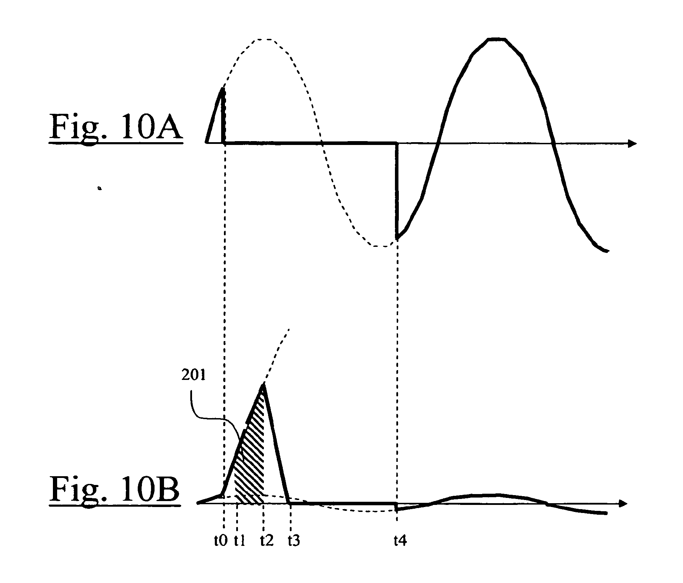

En référence aux figures 10A et 10B, le fonctionnement du disjoncteur limiteur 1 est expliqué dans le cas de l'apparition d'un courant de court-circuit en aval d'un disjoncteur divisionnaire 51. Ce fonctionnement est illustré en considérant un niveau présumé de courant de court-circuit et un instant d'apparition dudit court-circuit défini par rapport à un temps t0 d'origine.

Au temps t0 d'origine, le court-circuit apparait et il s'ensuit une augmentation brutale du courant circulant dans le disjoncteur limiteur 1 et une chute de la tension en aval dudit disjoncteur limiteur. Au bout de 0,05 milliseconde environ, l'actionneur magnétique du disjoncteur divisionnaire 51 en aval duquel le court-circuit est apparu commence son mouvement en vue de déverrouiller le mécanisme permettant l'ouverture des contacts dudit disjoncteur.

A un temps t1 d'environ 0,2 milliseconde, la fonction FF1 du courant, en l'occurrence égale à la valeur dudit courant, atteint une valeur dépassant le premier seuil S1. Ainsi, une première identification ID1 d'un courant de court-circuit a été réalisée. A partir de ce moment, le module de détermination F de la fonction FF2 est initialisé, et le carré de la valeur du courant I circulant dans le disjoncteur limiteur est intégré dans le temps. En même temps, l'interrupteur statique 13 est fermé et la propulsion des contacts de l'interrupteur à contact mécanique 11, en l'occurrence à effet Thomson, est commandée. Il s'ensuit que le courant qui circulait initialement dans l'interrupteur à contact mécanique 11 est progressivement transféré dans l'interrupteur statique 13. Ensuite, l'arc électrique de faible intensité qui s'était formé aux bornes de l'interrupteur à contact mécanique 11 est progressivement éteint. Le maintien ouvert des contacts de l'interrupteur à contact mécanique est ensuite commandé. Par ailleurs, à un temps sensiblement égal à 0,5 milliseconde, le seuil de déclenchement certain du disjoncteur divisionnaire en aval duquel un court-circuit est apparu est atteint, ce qui a pour conséquence de déverrouiller le mécanisme d'ouverture des contacts, et l'ouverture des contacts de ce disjoncteur est initialisée.

A un temps t2 d'environ 0,6 milliseconde, la valeur de la fonction FF2 calculée par le module F dépasse la valeur prédéterminée du second seuil S2. La surface striée représentée à la figure 10B sous la référence 201 correspond à la valeur de la fonction FF2, c'est-à-dire de l'intégrale dans le temps du carré du courant, lorsque celle-ci a atteint le seuil S2. Il s'ensuit que l'interrupteur statique 13 s'ouvre et que le courant I est transféré dans la varistance 17.

Entre le temps t2 et un temps t3 sensiblement égal à 0,8 milliseconde, l'énergie électrique est dissipée dans la varistance 17. Au temps t3, le court-circuit est éteint. Entre temps, l'ordre d'ouverture des contacts du disjoncteur divisionnaire 51 en aval duquel s'est produit le court-circuit a été donné et l'ouverture se poursuit jusqu'à un temps sensiblement égal à 10 millisecondes. A partir de ce moment, le court-circuit est isolé.

A un temps t4 sensiblement égal à 13 millisecondes, après la temporisation DT, l'interrupteur statique 13 est fermé de sorte que la tension est appliquée de nouveau sur les autres départs 49 ou les départs sains, c'est-à-dire les départs sans court-circuit. Au bout d'un temps sensiblement égal à 26 millisecondes, les condensateurs des moyens d'alimentation 25 sont rechargés et le maintien ouvert des contacts de l'interrupteur à contact mécanique 11 est relâché jusqu'à fermer lesdits contacts au bout d'un temps sensiblement égal à 36 millisecondes. L'interrupteur statique 13 peut ensuite être ouvert. Ainsi le disjoncteur limiteur se retrouve dans son état initial.

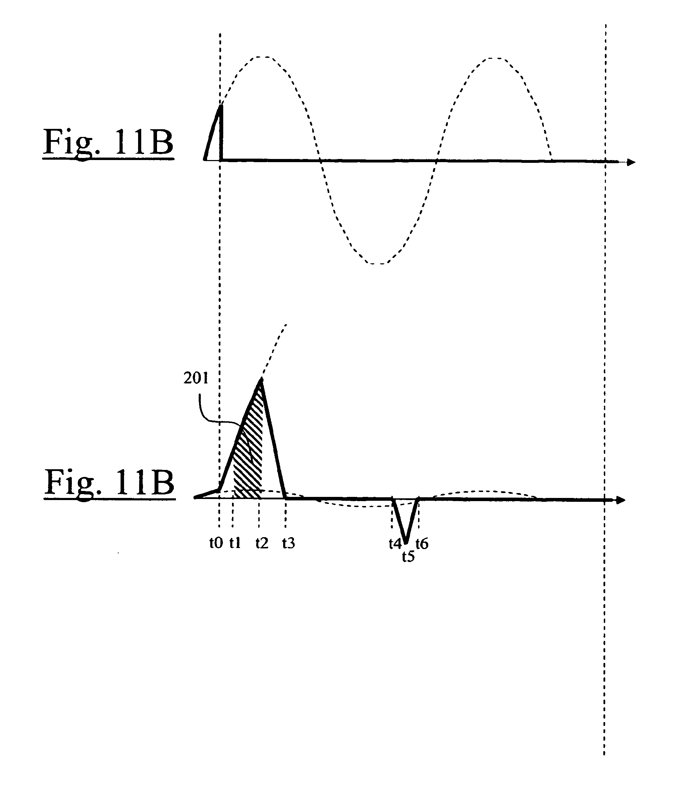

En référence aux figures 11A et 11B, le fonctionnement du disjoncteur limiteur 1 est expliqué dans le cas de l'apparition d'un courant de court-circuit en amont des disjoncteurs divisionnaires 51 ou bien dans le cas où le disjoncteur divisionnaire en aval duquel il se produit est défectueux.

Entre le temps t0 d'origine et le temps t4, les évolutions du courant circulant dans le disjoncteur limiteur 1 et de la tension aux bornes dudit disjoncteur limiteur sont les mêmes que celles illustrées par les figures 10A et 10B. La différence avec le cas précédent dans lequel le court-circuit était isolé par l'un des disjoncteurs divisionnaires 51 est que lesdits disjoncteurs divisionnaires restent toujours fermés.

Au temps t4, après la temporisation DT, l'interrupteur statique 13 est fermé de sorte que la tension est appliquée de nouveau sur tous les départs 49. Le court-circuit n'ayant pas été isolé par au moins l'un des disjoncteurs divisionnaires 51, il s'ensuit une augmentation brutale du courant circulant dans le disjoncteur limiteur 1. A un temps t5 d'environ 13,1 millisecondes, la fonction FF1 du courant, en l'occurrence égale à la valeur dudit courant, atteint une valeur dépassant le premier seuil S1. Ainsi, une seconde identification ID2 du courant de court-circuit a été réalisée. A partir de ce moment, l'interrupteur statique 13 s'ouvre et l'ouverture du sectionneur 55 est commandée. Le courant I est donc transféré dans la varistance 17.

Entre le temps t5 et un temps t6 sensiblement égal à 13,2 millisecondes, l'énergie électrique est dissipée dans la varistance 17. Au temps t6, le court-circuit est éteint. A un temps sensiblement égal à 15 millisecondes, l'ouverture des contacts du sectionneur se produit et le court-circuit est isolé. Ensuite, le contacteur d'isolement 24 est ouvert et le maintien ouvert des contacts de l'interrupteur à contact mécanique 11 est relâché jusqu'à fermer lesdits contacts au bout d'un temps sensiblement égal à 35 millisecondes. Ainsi le disjoncteur limiteur n'est plus sous tension et les départs 49 sont tous isolés.

Le disjoncteur limiteur de courant est adapté à la protection d'un dispositif de distribution comprenant une canalisation préfabriquée alimentant un ou plusieurs tableaux électriques incorporant des disjoncteurs divisionnaires. Le disjoncteur limiteur de courant est également adapté à la protection d'un dispositif de distribution comprenant un câble électrique alimentant une pluralité de départs répartis le long dudit câble.

## Revendications

1. Disjoncteur limiteur de courant (1) destiné à être installé dans un circuit électrique (10) entre une arrivée (45) d'un disjoncteur de tête (47) et au moins un départ (49) pourvu d'un disjoncteur et/ou d'un contacteur divisionnaire (51), pour limiter un courant (I) circulant dans ledit circuit, ledit disjoncteur comprenant :
- des moyens interrupteurs (8) disposés en série sur ledit circuit électrique et connectés à des moyens de commande (15) pour ouvrir ledit circuit après une première identification (ID1) d'un courant de court-circuit et pour fermer automatiquement ledit circuit après une durée prédéterminée (DT), et
- au moins un élément à résistance dépendante de la tension (17) connecté en parallèle desdits moyens interrupteurs pour dissiper l'énergie stockée dans ledit circuit lorsque lesdits moyens interrupteurs sont dans un état ouvert,
**caractérisé en ce que** ledit disjoncteur limiteur de courant comprend des moyens de sectionnement (55) disposés entre ladite arrivée et lesdits moyens interrupteurs, et connectés aux dits moyens de commande, lesdits moyens de commande étant conçus pour sectionner ledit circuit après une seconde identification (ID2) dudit courant de court-circuit.

2. Disjoncteur selon la revendication 1, **caractérisé en ce que** les moyens interrupteurs comportent un interrupteur à contact mécanique (11) monté en parallèle avec un interrupteur statique (13).

3. Disjoncteur selon les revendications 1 ou 2, **caractérisé en ce qu'**il comporte un contacteur (24) disposé entre les moyens interrupteurs (8) et le au moins un départ (49), ledit contacteur étant connecté au moyens de commande (15) pour être maintenu ouvert par défaut et pour être fermé lors de la mise sous tension dudit disjoncteur, après la fermeture préalable des moyens de sectionnement (55) et l'ouverture consécutive des moyens interrupteurs (8).

4. Disjoncteur selon l'une quelconque des revendications précédentes, **caractérisé en ce qu'**il comporte des moyens de mesure (31) du courant (I) circulant dans le circuit, les moyens de commande (15) comprenant :
- des premiers moyens de comparaison (C1) connectés aux dits moyens de mesure du courant pour comparer la valeur d'une première fonction (FF1) dépendante dudit courant avec un premier seuil prédéterminé (S1) pour fournir un signal représentatif de l'identification d'un courant de court-circuit,
- un module de détermination (F) de la valeur d'une seconde fonction (FF2) dépendante du temps et dudit courant pourvu d'une entrée d'initialisation (INI) connectée aux dits premiers moyens de comparaison, et
- des seconds moyens de comparaison (C2) connectés au dit module de détermination pour comparer ladite valeur de la seconde fonction (FF2) avec un second seuil prédéterminé (S2), lesdits seconds moyens de comparaison étant connectés aux moyens interrupteurs (8) pour ouvrir le circuit (10) lorsque la valeur de ladite seconde fonction est supérieure ou égale au dit second seuil.

5. Disjoncteur selon la revendication 4, **caractérisé en ce que** les moyens de commande (15) comprennent des troisième moyens de comparaison (C3) connectés au moyens de mesure (31) du courant (I) circulant dans le circuit pour comparer la valeur dudit courant avec une valeur maximale (IMAX) dudit courant, lesdits troisièmes moyens de comparaison étant connectés aux moyens interrupteurs (8) pour ouvrir le circuit (10) lorsque la valeur dudit courant est supérieure ou égale à ladite valeur maximale dudit courant.

6. Dispositif de distribution électrique comportant au moins un départ (49) pourvu d'un disjoncteur et/ou d'un contacteur divisionnaire (51) et un circuit électrique entre une arrivée (45) d'un disjoncteur de tête (47) et ledit au moins un départ, ledit circuit électrique renfermant des moyens limiteurs de courant,
**caractérisé en ce que** lesdits moyens limiteurs de courant comportent un disjoncteur limiteur de courant (1) selon l'une quelconque des revendications précédentes, ledit disjoncteur limiteur comprenant des moyens interrupteurs (8) pour limiter un courant (I) circulant dans ledit circuit électrique.

7. Procédé de limitation d'un courant (I) circulant dans un circuit électrique (10) entre une arrivée (45) d'un disjoncteur de tête (47) et au moins un départ (49) pourvu d'un disjoncteur et/ou d'un contacteur divisionnaire (51), ledit procédé comprenant :
- l'ouverture (OPN) de moyens interrupteurs (8) disposés en série sur ledit circuit électrique en réponse à la commande d'ouverture dudit circuit lors d'une première identification (101, ID1) d'un courant de court-circuit,
- la limitation (111) dudit courant pendant l'état ouvert desdits moyens interrupteurs, et
- la fermeture (113) desdits moyens interrupteurs en réponse à la commande de fermeture dudit circuit après une durée prédéterminée (DT),
**caractérisé en ce qu'**il comporte le sectionnement (125, SCTNT) automatique dudit circuit après une seconde identification (115, ID2) dudit courant de court-circuit.

8. Procédé selon la revendication 7, **caractérisé en ce que** l'ouverture (OPN) des moyens interrupteurs (8) suite à la première identification (101, ID1) comporte :
- la fermeture (107, CLS_STC) d'un interrupteur statique (13) desdits moyens interrupteur,
- l'ouverture (108, OPN_lNT) d'un interrupteur à contact mécanique (11) disposé en parallèle avec ledit interrupteur statique, et
- l'ouverture (109, OPN_STC) dudit interrupteur statique.

9. Procédé selon la revendication 8, **caractérisé en ce que** le sectionnement (125, SCTNT) du circuit (10) est réalisé après l'ouverture (121, OPN_STC) de l'interrupteur statique.

10. Procédé selon l'une des revendications 7 à 9, **caractérisé en ce qu'**il comporte une mise sous tension comprenant :
- la fermeture préalable (141, CLS_SCT) des moyens de sectionnement (55),
- l'ouverture préalable (143, OPN_INT) des moyens interrupteurs (8),
- la fermeture (145, CLS_CTR) d'un contacteur (24) disposé entre lesdits moyens interrupteurs et le au moins un départ (49), et
- la fermeture consécutive (147, CLS_STC) desdits moyens interrupteurs.

11. Procédé selon la revendication 10, **caractérisé en ce que** la fermeture consécutive (147, CLS_STC) des moyens interrupteurs (8) se fait par l'entremise de l'interrupteur statique (13).

12. Procédé selon la revendication 11, **caractérisé en ce que** la mise sous tension est poursuivie par :
- la fermeture (149, CLS_INT) de l'interrupteur à contact mécanique, et
- l'ouverture (151, OPN_STC) de l'interrupteur statique.

13. Procédé selon l'une quelconque des revendications 7 à 12, **caractérisé en ce qu'**il comporte la mesure d'un courant (I) circulant dans le circuit électrique (10), l'ouverture (OPN) des moyens interrupteurs (8) lors d'une première identification (ID1) d'un courant de court-circuit comprenant :
- une première comparaison (101, ID1) de la valeur d'une première fonction (FF1) dépendante dudit courant avec un premier seuil prédéterminé (S1) afin de réaliser la première identification (ID1) d'un courant de court-circuit,
- la détermination (103) de la valeur d'une seconde fonction (FF2) dépendante du temps et dudit courant lorsque ledit courant est supérieur ou égale au dit premier seuil (S1),
- une seconde comparaison (105) de ladite valeur de la seconde fonction (FF2) avec un second seuil prédéterminé (S2), l'ouverture (OPN) desdits moyens interrupteurs étant commandée lorsque la valeur de ladite seconde fonction est supérieure ou égale au dit second seuil (S2).

14. Procédé selon la revendication 13, **caractérisé en ce qu'**il comprend une troisième comparaison (106) de la valeur du courant (I) avec une valeur courant maximale dudit courant (IMAX), l'ouverture (OPN) desdits moyens interrupteurs étant commandée lorsque la valeur dudit courant est supérieure ou égale à ladite valeur maximale dudit courant.

15. Procédé selon l'une quelconque des revendications 13 ou 14, **caractérisé en ce que** le second seuil (S2) est choisi supérieur à un troisième seuil (S3) de déclenchement certain du disjoncteur divisionnaire (51) présentant le seuil de déclenchement instantanée le plus élevé et inférieur à un quatrième seuil (S4) de non déclenchement du disjoncteur de tête (47).

## Patentansprüche

1. Strombegrenzender Leistungsschalter (1), der dazu dient, in einem elektrischen Stromkreis (10), zwischen einer Einspeisung eines Eingangsleistungsschalters (47) und mindestens einem, mit einem Abgangsleistungsschalter und/oder -schütz (51) bestückten Abgang (49) zur Begrenzung eines über den genannten Stromkreis fließenden Stroms (I) installiert zu werden, welcher Leistungsschalter
in Reihe zum genannten elektrischen Stromkreis geschaltete und an Steuermittel (15) angeschlossene Stromunterbrechungsmittel (8) zur Abschaltung des genannten Stromkreises nach einer ersten Erkennung (ID1) eines Kurzschlussstroms sowie zum automatischen Einschalten des genannten Stromkreises nach Ablauf einer bestimmten Zeitdauer (DT) und
mindestens ein spannungsabhängiges Widerstandselement (17) umfasst, das parallel zu den Stromunterbrechungsmitteln geschaltet ist, um die im genannten Stromkreis gespeicherte Energie aufzunehmen, wenn sich die Stromunterbrechungsmittel in einer Ausschaltstellung befinden,
**dadurch gekennzeichnet, dass** der genannte strombegrenzende Leistungsschalter Trennmittel (55) umfasst, die zwischen der genannten Einspeisung und den genannten Stromunterbrechungsmitteln angeordnet und mit den genannten Steuermitteln verbunden sind, welche Steuermittel dazu ausgelegt sind, den genannten Stromkreis nach einer zweiten Erkennung (ID2) des genannten Kurzschlussstroms zu trennen.

2. Leistungsschalter nach Anspruch 1, **dadurch gekennzeichnet, dass** die Stromunterbrechungsmittel einen Schalter mit mechanischen Kontakten (11) umfassen, der parallel zu einem elektronischen Schalter (13) geschaltet ist.

3. Leistungsschalter nach Anspruch 1 oder 2, **dadurch gekennzeichnet, dass** er ein zwischen die Stromunterbrechungsmittel (8) und den mindestens einfach vorhandenen Abgang (49) geschaltetes Schütz (24) umfasst, welches Schütz mit den Steuermitteln (15) verbunden ist, um im Normalzustand in der Ausschaltstellung gehalten und bei Anlegen einer Spannung an den Leistungsschalter nach vorherigem Schließen der Trennmittel (55) und aufeinanderfolgender Abschaltung der Stromunterbrechungsmittel (8) eingeschaltet zu werden.

4. Leistungsschalter nach irgendeinem der vorherigen Ansprüche, **dadurch gekennzeichnet, dass** er Messmittel (31) zur Messung des über den elektrischen Stromkreis fließenden Stroms (I) umfasst, wobei die Steuermittel (15):
an die genannten Strommessmittel angeschlossene erste Vergleichsmittel (C1) zum Vergleich des Wertes einer vom genannten Strom abhängigen ersten Funktion (FF1) mit einem bestimmten ersten Schwellwert (S1) und Lieferung eines die Erkennung eines Kurzschlussstroms abbildenden Signals,
ein Modul (F) zur Bestimmung des Wertes einer von der Zeit und vom genannten Strom abhängigen zweiten Funktion (FF2) mit einem an die genannten ersten Vergleichsmittel angeschlossenen Initialisierungseingang (INI) sowie
an das genannte Bestimmungsmodul angeschlossene zweite Vergleichsmittel (C2) umfassen, die dazu dienen, den genannten Wert der zweiten Funktion (FF2) mit einem bestimmten zweiten Schwellwert (S2) zu vergleichen, wobei die genannten zweiten Vergleichsmittel an die Stromunterbrechungsmittel (8) angeschlossen sind, um den Stromkreis (10) zu öffnen, wenn der Wert der genannten zweiten Funktion größer oder gleich dem genannten zweiten Schwellwert ist.

5. Leistungsschalter nach Anspruch 4, **dadurch gekennzeichnet, dass** die Steuermittel (15) an die Messmittel (31) zur Messung des über den Stromkreis fließenden Stroms (I) angeschlossene dritte Vergleichsmittel (C3) umfassen, um den Wert des genannten Stroms mit einem Maximalwert (IMAX) des genannten Stroms zu vergleichen, wobei die genannten dritten Vergleichsmittel an die Stromunterbrechungsmittel (8) angeschlossen sind, um den Stromkreis (10) zu öffnen, wenn der Wert des genannten Stroms größer oder gleich dem Maximalwert des genannten Stroms ist.

6. Einrichtung zur elektrischen Energieverteilung mit mindestens einem, mit einem Abgangsleistungsschalter und/oder -schütz (51) bestückten Abgang (49) sowie einem elektrischen Stromkreis, der zwischen einen Einspeisepunkt (45) eines Eingangsleistungsschalters (47) und den genannten, mindestens einfach vorhandenen Abgang geschaltet ist und Strombegrenzungsmittel umfasst, **dadurch gekennzeichnet, dass** die genannten Strombegrenzungsmittel einen strombegrenzenden Leistungsschalter (1) nach einem der vorhergehenden Ansprüche umfassen, welcher strombegrenzende Leistungsschalter Stromunterbrechungsmittel (8) zur Begrenzung eines über den genannten elektrischen Stromkreis fließenden Stroms (I) umfasst.

7. Verfahren zur Begrenzung eines in einem elektrischen Stromkreis (10), zwischen einem Einspeisepunkt (45) eines Eingangsleistungsschalters (47) und mindestens einem mit einem Abgangsleistungsschalter und/oder -schütz (51) bestückten Abgang (49) fließenden Stroms (I), welches Verfahren
die Abschaltung (OPN) von in Reihe zum genannten elektrischen Stromkreis geschalteten Stromunterbrechungsmitteln (8) infolge eines Befehls zur Abschaltung des genannten Stromkreises nach einer ersten Erkennung (101, ID1) eines Kurzschlussstroms,
die Begrenzung (111) des genannten Stroms während des Ausschaltzustands der genannten Stromunterbrechungsmittel und
die Einschaltung (113) der genannten Stromunterbrechungsmittel infolge eines Befehls zum Einschalten des genannten Stromkreises nach Ablauf einer bestimmten Zeitdauer (DT) umfasst,
**dadurch gekennzeichnet, dass** es die automatische Trennung (125, SCTNT) des genannten Stromkreises nach einer zweiten Erkennung (115, ID2) des genannten Kurzschlussstroms umfasst.

8. Verfahren nach Anspruch 7, **dadurch gekennzeichnet, dass** die Abschaltung (OPN) der Stromunterbrechungsmittel (8) infolge der ersten Kurzsschlussstromerkennung (101, ID1)
das Einschalten (107, CLS_STC) eines elektronischen Schalters (13) der genannten Unterbrechungsmittel,
das Ausschalten (108, OPN_INT) eines parallel zum genannten elektronischen Schalter angeordneten Schalters mit mechanischen Kontakten (11) und
das Ausschalten (109, OPN_STC) des genannten elektronischen Schalters umfasst.

9. Verfahren nach Anspruch 8, **dadurch gekennzeichnet, dass** die Trennung (125, SCTNT) des Stromkreises (10) nach dem Ausschalten (121, OPN_STC) des elektronischen Schalters erfolgt.

10. Verfahren nach einem der Ansprüche 7 bis 9, **dadurch gekennzeichnet, dass** es eine Spannungsaufschaltung mit
vorherigem Schließen (141, CLS_SCT) der Trennmittel (55),
vorheriger Abschaltung (143, OPN_INT) der Stromunterbrechungsmittel (8), Einschaltung (145, CLS_CTR) eines zwischen die Stromunterbrechungsmittel und den mindestens einfach vorhandenen Abgang (49) geschalteten Schützes (24) sowie aufeinanderfolgender Einschaltung (147, CLS_STC) der genannten Unterbrechungsmittel umfasst.

11. Verfahren nach Anspruch 10, **dadurch gekennzeichnet, dass** die aufeinanderfolgende Einschaltung (147, CLS STC) der Stromunterbrechungsmittel (8) durch den elektronischen Schalter (13) erfolgt.

12. Verfahren nach Anspruch 11, **dadurch gekennzeichnet, dass** nach der Spannungsaufschaltung
die Einschaltung (149, OPN_INT) des Schalters mit mechanischen Kontakten11 und
die Ausschaltung (151, OPN_STC) des elektronischen Schalters erfolgt.

13. Verfahren nach irgendeinem der Ansprüche 7 bis 12, **dadurch gekennzeichnet, dass** es die Messung des über den elektrischen Stromkreis (10) fließenden Stroms (I) umfasst, wobei die Abschaltung (OPN) der Stromunterbrechungsmittel (8) bei einer ersten Erkennung (ID1) eines Kurzschlussstroms
einen ersten Vergleich (101, ID1) des Wertes einer, vom genannten Strom abhängigen ersten Funktion (FF1) mit einem bestimmten ersten Schwellwert (S1) zur Durchführung der ersten Erkennung (ID1) eines Kurzschlussstroms,
die Bestimmung (103) des Wertes einer von der Zeit und vom genannten Strom abhängigen zweiten Funktion (FF2), wenn der genannte Strom größer oder gleich dem genannten ersten Schwellwert (S1) ist, sowie
einen zweiten Vergleich (105) des genannten Wertes der zweiten Funktion (FF2) mit einem bestimmten zweiten Schwellwert (S2) umfasst, wobei die Abschaltung (OPN) der genannten Stromunterbrechungsmittel angesteuert wird, wenn der Wert der genannten zweiten Funktion größer oder gleich dem genannten zweiten Schwellwert (S2) ist.

14. Verfahren nach Anspruch 13, **dadurch gekennzeichnet, dass** es einen dritten Vergleich (106) des Stromwertes (I) mit einem Maximalwert (IMAX) des genannten Stroms umfasst, wobei die Abschaltung (OPN) der genannten Stromunterbrechungsmittel angesteuert wird, wenn der Wert des genannten Stroms größer oder gleich dem genannten Maximalwert des genannten Stroms ist.

15. Verfahren nach irgendeinem der Ansprüche 13 oder 14, **dadurch gekennzeichnet, dass** für den zweiten Schwellwert (S2) ein Wert gewählt wird, der über einem dritten Schwellwert (S3) entsprechend einer sicheren Auslösung des Abgangsleistungsschalters (51) mit dem höchsten Ansprechwert der unverzögerten Kurzschlussauslösung und unter einem vierten Schwellwert (S4) entsprechend einer Nichtauslösung des Eingangsleistungsschalters (47) liegt.

## Claims

1. A current limiting circuit breaker (1) designed to be installed in an electric circuit (10) between an incomer (45) of a main circuit breaker (47) and at least one feeder (49) provided with a circuit breaker and/or with a divisional contactor (51) to limit a current (I) flowing in said circuit, said device comprising:
- switch means (8) arranged in series on said electric circuit and connected to control means (15) to open said circuit after a first identification (ID1) of a short-circuit current and to close said circuit automatically after a predefined time (DT), and
- at least one voltage-dependent resistance element (17) connected in parallel to said switch means to dissipate the energy stored in said circuit when said switch means are in an open state,
**characterized in that** said current limiting circuit breaker comprises disconnection means (55) arranged between said incomer and said switch means, and connected to said control means, said control means being designed to interrupt said circuit (ID2) after a second identification of said short-circuit current.

2. The circuit breaker according to claim 1, **characterized in that** the switch means comprise a mechanical contact switch (11) fitted in parallel with a static switch (13).

3. The circuit breaker according to claims 1 or 2, **characterized in that** it comprises a contactor (24) arranged between the switch means (8) and the at least one feeder (49), said contactor being connected to the control means (15) to be kept open by default and to be closed when voltage supply of said circuit breaker is established, after prior closing of the disconnection means (55) and consecutive opening of the switch means (8).

4. The circuit breaker according to any one of the foregoing claims, **characterized in that** it comprises means for measuring (31) the current (I) flowing in the circuit, the control means (15) comprising:
- first comparison means (C1) connected to said means for measuring the current to compare the value of a first function (FF1) dependent on said current with a first predefined threshold (S1) to provide a signal representative of identification of a short-circuit current,
- a determination module (F) for determining the value of a second function (FF2) dependent on time and on said current provided with a reset input (INI) connected to said first comparison means, and
- second comparison means (C2) connected to said determination module to compare said value of the second function (FF2) with a predefined second threshold (S2), said second comparison means being connected to the switch means (8) to open the circuit (10) when the value of said second function is greater than or equal to said second threshold.

5. The circuit breaker according to claim 4, **characterized in that** the control means (15) comprise third comparison means (C3) connected to the means for measuring (31) the current (I) flowing in the circuit to compare the value of said current with a maximum value (IMAX) of said current, said third comparison means being connected to the switch means (8) to open the circuit (10) when the value of said current is greater than or equal to said maximum value of said current.

6. An electric distribution device comprising at least one feeder (49) provided with a circuit breaker and/or with a divisional contactor (51) and an electric circuit between an incomer (45) of a main circuit breaker (47) and said at least one feeder, said electric circuit containing current limiting means,
**characterized in that** said current limiting means comprise a current limiting circuit breaker (1) according to any one of the foregoing claims, said limiting circuit breaker comprising switch means (8) to limit a current (I) flowing in said electric circuit.

7. A method for limiting a current flowing in an electric circuit between an incomer of a main circuit breaker and at least one feeder provided with a circuit breaker and/or with a divisional contactor, said method comprising:
- opening (OPN) of switch means (8) arranged in series on said electric circuit in response to the opening command of said circuit on a first identification (101, ID1) of a short-circuit current,
- limiting (111) of said current during the open state of said switch means, and
- closing (113) of said switch means in response to the closing command of said circuit after a predefined time (DT),
**characterized in that** it comprises automatic disconnection (125, SCTNT) of said circuit after a second identification (115, ID2) of said short-circuit current.

8. The method according to claim 7, **characterized in that** opening (OPN) of the switch means (8) forming the first identification (101, ID1) comprises:
- closing (107, CLS_STC) of a static switch (13) of said switch means,
- opening (108, OPN_INT) of a mechanical contact switch (11) connected in parallel with said switch static, and
- opening (109, OPN-STC) of said static switch.

9. The method according to claim 8, **characterized in that** disconnection (125, SCTNT) of the circuit (10) is performed after opening (121, OPN-STC) of the static switch.

10. The method according to one of claims 7 to 9, **characterized in that** it comprises voltage supply comprising:
- prior closing (141, CLS_SCT) of the disconnection means (55),
- prior opening (143, OPN_INT) of the switch means (8),
- closing (145, CLS_CTR) of a contactor (24) arranged between said switch means and the at least one feeder (49), and
- consecutive closing (147, CLS_STC) of said switch means.

11. The method according to claim 10, **characterized in that** consecutive closing (147, CLS_STC) of the switch means (8) is performed by means of the static switch (13).

12. The method according to claim 11, **characterized in that** voltage supply is followed by:
- closing (149, CLS_INT) of the mechanical contact switch, and
- opening (151, OPN_STC) of the static switch.

13. The method according to any one of claims 7 to 12, **characterized in that** it comprises measurement of a current (I) flowing in the electric circuit (10), opening (OPN) of the switch means (8) on a first identification (ID1) of a short-circuit current comprising:
- a first comparison (101, ID1) of the value of a first function (FF1) dependent on said current with a predefined first threshold (S1) in order to perform the first identification (ID1) of a short-circuit current,
- determination (103) of the value of a second function (FF2) dependent on time and on said current when said current is greater than or equal to said first threshold (S1),
- a second comparison (105) of said value of the second function (FF2) with a predefined second threshold (S2), opening (OPN) of said switch means being commanded when the value of said second function is greater than or equal to said second threshold (S2).

14. The method according to claim 13, **characterized in that** it comprises a third comparison (106) of the value of the current (I) with a maximum value of said current (IMAX), opening (OPN) of said switch means being commanded when the value of said current is greater than or equal to said maximum value of said current.

15. The method according to any one of claims 13 or 14, **characterized in that** the second threshold (S2) is chosen higher than a third certain tripping threshold (S3) of the divisional circuit breaker (51) presenting the highest instantaneous tripping threshold and lower than a fourth non-tripping threshold (S4) of the main circuit breaker (47).
